# EUROPÄISCHE PATENTSCHRIFT

(11) **EP 0 849 137 B1**
(45) Veröffentlichungstag und Bekanntmachung des Hinweises auf die Patenterteilung: **13.02.2002**
(21) Anmeldenummer: 96810879.5
(22) Anmeldetag: 17.12.1996
(51) Int. Cl.: B61D 33/00, B60N 2/00

(54) **Stuhl und Fahrzeug mit mindenstens einem derartigen Stuhl**
Chair and vehicle with at least one such chair
Chaise et véhicule avec au moins une telle chaise

(43) Veröffentlichungstag der Anmeldung: 24.06.1998
(73) Patentinhaber: DaimlerChrysler Rail Systems GmbH, 13627 Berlin (DE)
(72) Erfinder: Hecht, Markus, Dr., 79798 Jestetten (DE)
(74) Vertreter: Thielmann, Andreas

(56) Entgegenhaltungen:
- DE-A- 3 942 798
- GB-A- 724 365

## Beschreibung

Die Erfindung betrifft einen Stuhl gemäss dem Oberbegriff des Patentanspruchs 1 und ein Fahrzeug mit einer mindestens einen derartigen Stuhl enthaltenden Bestuhlung.

Es ist bekannt, Stühle der genannten Art mit Tragkonstruktionen aus relativ harten Schalenteilen auszuführen, welche jeweils mit einer Polsterung des Sitzteils und/oder der Rückenlehne versehen sein können. Bei Verwendung derartiger Stühle zur Bestuhlung von Fahrzeugen muss die Tragkonstruktion jeweils so ausgeführt sein, dass eine sichere Aufnahme von Beschleunigungskräften und eine sichere Verankerung des Stuhls im Fahrzeug gewährleistet wird. In Fahrzeugen, z.B. Schienenfahrzeugen, können, insbesondere bei hohen Fahrgeschwindigkeiten, relativ hohe Belastungen durch Lärmimissionen auftreten, welche bei bisherigen Bestuhlungen nur in geringem Masse durch die Polsterung gedämpft werden können. Entsprechend entsteht ein relativ hoher Lärmpegel, welcher von im lärmbelasteten Raum befindlichen Personen als störend empfunden wird und welcher den Fahrkomfort, insbesondere die Sprachverständigung, empfindlich beeinträchtigen kann.

Der Erfindung liegt die Aufgabe zugrunde, einen insbesondere in dieser Hinsicht verbesserten Stuhl der eingangs genannten Art in einer einfachen, formstabilen Ausführung zu schaffen, welche eine sichere Verankerung des Stuhls gewährleistet und zugleich eine wirksame Verringerung des im bestuhlten Raum herrschenden Lärmpegels ermöglicht.

Diese Aufgabe wird gemäss der Erfindung mit einem Stuhl gelöst, der die Merkmale im Kennzeichen des unabhängigen Anspruchs 1 aufweist. Ein Fahrzeug mit einer Bestuhlung, welche mindestens einen derartigen Stuhl aufweist, ist Gegenstand des Anspruchs 10. Ausgestaltungen der Erfindung sind in den abhängigen Ansprüchen angegeben.

Die erfindungsgemässe Ausführung des Stuhls gestattet eine gezielte Verminderung des im geschlossenen Raum vorhandenen, tieffrequenten Lärms durch Absorption des Luftschalls in einem Frequenzbereich unterhalb von ca. 800 Hz, wobei die schalldurchlässige Struktur des Tragteils der Tragkonstruktion Mikrobewegungen des Absorptionsmaterials zulässt und damit., im Vergleich zu bisherigen Ausführungnen, die Reduktion eines wesentlich grösseren Lärmanteils gewährleistet. Weitere Einzelheiten ergeben sich aus der folgenden Beschreibung von in der Zeichnung schematisch dargestellten Ausführungsbeispielen nach der Erfindung, in Verbindung mit den Ansprüchen. Es zeigen:
- Fig.1: einen Teil einer Bestuhlungsanordnung mit zwei erfindungsgemäss ausgeführten Stühlen in einer Vorderansicht mit einem Teilschnitt,
- Fig.2: eine Seitenansicht der Anordnung gemäss Pfeil II in Fig.1, mit einem Teilschnitt,
- Fig.3: einen weiteren erfindungsgemäss ausgeführten Stuhl nach einer abgewandelten Ausführungsform, in einer Vorderansicht.

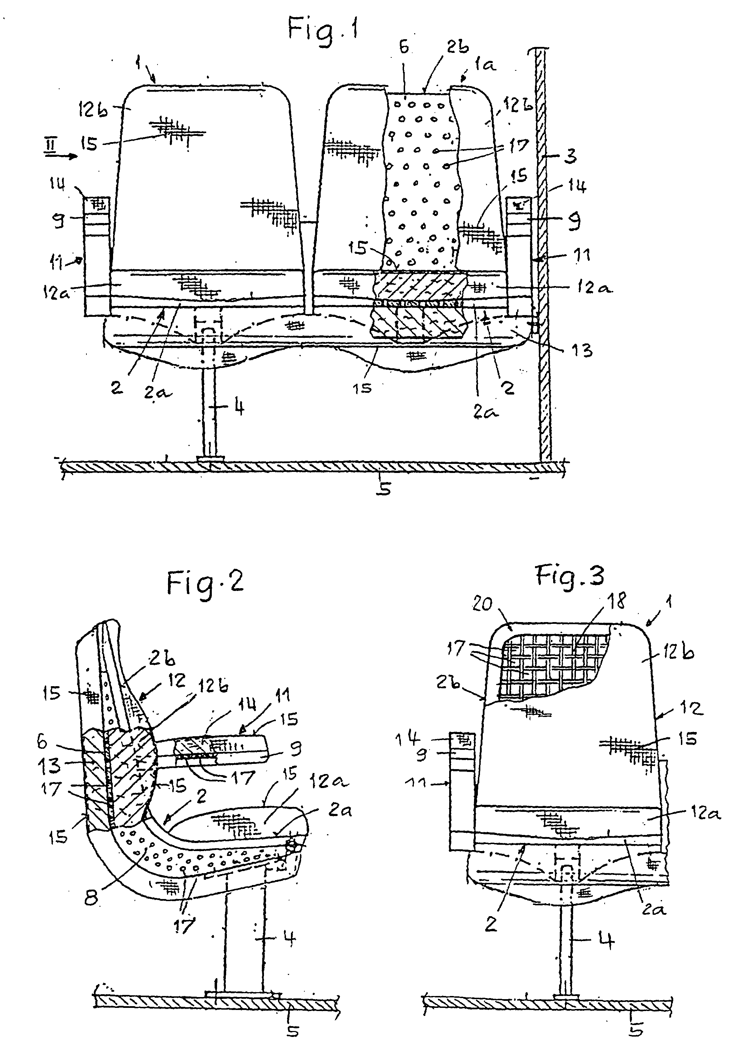

Gemäss Fig.1 sind in einem Fahrzeug, beim dargestellten Beispiel einem Schienenfahrzeug, zwei erfindungsgemäss ausgebildete, miteinander verbundene Stühle 1 und 1a angeordnet, von denen der eine an einer seitlichen Wandpartie 3 des Fahrzeuges befestigt und der andere auf einem Stützteil 4 angebracht ist, welcher auf einer Bodenpartie 5 des Fahrzeugs verankert ist. Die Stühle 1 und 1a sind Teil einer nicht weiter dargestellten Bestuhlung, welche mehrere, über einen Passagierraum des Fahrzeugs verteilt angeordnete Reihen derartiger Stühle 1, 1a enthält. Die Stühle 1 und 1a enthalten je eine mit der Wandpartie 3 bzw. dem Stützteil 4 verbindbare Tragkonstruktion 2, welche durch einen schalenartigen Tragteil 6 gebildet ist. Der Tragteil 6, welcher aus Holz, Metall oder, wie bei der dargestellten Ausführung, aus einem Kunststoff gefertigt sein kann, bildet einen Sitzteil 2a, eine Rückenlehne 2b und zwei entlang deren Randbereichen verlaufende, den Sitzbereich seitlich begrenzende, darstellungsgemäss aufgebogene Seitenwandpartien 8. Die Tragkonstruktionen 2 können ferner je mit mindestens einem Tragteil 9 für eine Armlehne 11 versehen sein.

Der Tragteil 6 ist mit Abdeckungen 12 bzw. 13 versehen, welche je ein luftschallabsorbierendes Material enthalten, wobei die Abdeckung 12 als über den Sitzbereich durchgehende Polsterung oder, wie dargestellt, in Form von getrennten Polstern 12a und 12b des Sitzteils 2a und der Rückenlehne 2b ausgeführt sein kann. Die Armlehnen 11 können darstellungsgemäss je mit einer entsprechenden Abdeckung 14 versehen sein. Die Abdeckungen 12, 13 und 14 sind je mit einer für den Luftschall durchlässigen, Durchtrittsöffnungen aufweisenden Verkleidung 15, darstellungsgemäss in Form eines Gewebes, versehen. Als Verkleidung 15 kann auch ein Geflecht oder eine perforierte Folie vorgesehen sein. Die Abdeckungen 12, 13 und 14 können jeweils durch eine Matte aus einem offenporigen Schaumstoff, z.B. Polyether, oder einem anderen hochabsorbierenden Material, z.B. Filz, Rosshaar, Steinwolle, Glaswolle oder dergl., gebildet sein. Die Matten können darstellungsgemäss in der Abdeckung 12, welche sowohl dem Sitzkomfort als auch einer verbesserten Luftschallabsorption dient, nach anatomischen oder ergonomischen Gesichtspunkten gestaltet sein. In der Armlehne 11 und in der nur zur Luftschallabsorption vorgesehenen Abdeckung 13 kann die Matte plattenförmig ausgeführt sein.

Die zur Aufnahme der Abdeckungen 12, 13 und 14 bestimmten Tragteile 6 und 9 der Tragkonstruktion 2 weisen je eine schalldurchlässige Struktur auf. Entsprechend sind beim dargestellten Beispiel die Tragteile 6 und 9 sowie die Seitenwandpartien 8 je zumindest im Anordnungsbereich der Abdeckungen 12, 13 und 14 mit einer Vielzahl von Durchtrittsöffnungen 17 für den Luftschall versehen, welche, zusammen mit den in den Verkleidungen 15 ausgebildeten Durchtrittsöffnungen, Mikrobewegungen der jeweils angrenzenden Partien der Abdeckungen 12, 13, 14 zulassen und damit eine wirksame Absorption eines wesentlichen Teils des eindringenden Luftschalls ermöglichen. Ein besonderer Vorteil der beschriebenen Anordnung besteht darin, dass der Luftschall jeweils beidseitig in das Absorptionsmaterial eindringen kann und dass durch die Durchtrittsöffnungen 17 die Bildung von Schallschnelleknoten auf der Tragstruktur vermieden werden kann. Es hat sich gezeigt, dass dadurch eine Lärmverminderung von ca. 3 - 5 dB erzielbar ist.

Anzahl und Grösse der Durchtrittsöffnungen 17 sind so gewählt, dass die Summe der Querschnitte der im Anordnungsbereich der Abdeckungen 12, 13, 14 vorgesehenen Durchtrittsöffnungen 17 mindestens 10%, zweckmässigerweise ca. 30%, der abgedeckten Flächenpartie des betreffenden Tragteils entspricht.

Entsprechend der Darstellung nach Fig.3 kann die schalldurchlässige Struktur der Tragkonstruktion 2 auch durch einen rahmenartigen Tragteil 20 erzielt werden, welcher mit einer zur Uebertragung von Stützkräften geeigneten, gitterartigen Stützanordnung 18 versehen ist. Als Stützanordnung 18 kann z.B. ein formstabiles Drahtgitter, ein entsprechend steifes Drahtgewebe oder ein Drahtgeflecht vorgesehen sein, an welchem den Seitenwandpartien 8 (Fig.2) entsprechende, die Abdeckung 12 seitlich begrenzende, aufgebogene Randpartien ausgebildet sein können. Nach einer weiteren, nicht dargestellten Ausführungsform kann die Tragkonstruktion 2 auch als rahmenlose Stützanordnung ausgebildet sein, die aus einem in sich formstabilen Drahtgeflecht oder einer entsprechenden Gitterstruktur besteht.

Abweichend von den dargestellten Beispielen sind auch einfachere Ausführungen möglich, bei denen etwa jeweils nur ein Teil des Stuhls, z.B. nur der Sitzbereich oder nur die dem Sitzbereich abgewandte Seite des Stuhls mit einer entsprechenden Abdeckung 12 bzw. 13 aus dem luftschallabsorbierenden Material versehen ist. Nach einer weiteren, nicht dargestellten Ausführungsform kann die Tragkonstruktion 2 jeweils durch voneinander getrennte, je den Sitzteil 2a bzw. die Rückenlehne 2b bildende Tragteile gebildet sein. Es ist auch eine Ausführung möglich, bei der die Verkleidung 15 der dem Sitzbereich abgewandten Abdeckung 13 in Form einer perforierten, z.B. metallischen Wandpartie, eines Drahtgewebes oder Drahtgeflechts ausgeführt ist, um eine mutwillige Beschädigung der Abdeckung 13 zu erschweren. Entsprechende Schutzvorkehrungen können auch innerhalb der Polsterung 12 und 12a vorgesehen sein.

Der erfindungsgemäss ausgeführte Stuhl ist für Fahrzeuge beliebiger Art, zur Bestuhlung von Passagier- und/oder Fahrerräumen von Landfahrzeugen, insbesondere Schienenfahrzeugen, Wasserfahrzeugen, Luftfahrzeugen, oder z.B. für Fahrerkabinen von Baumaschinen und dergl. geeignet. Der erfindungsgemäss ausgebildete Stuhl kann ebenso für die Bestuhlung von ortsfesten Räumen, z.B. von Lärmimissionen ausgesetzten Arbeits- und Aufenthaltsräumen, verwendet werden.

Die Erfindung lässt sich zusammenfassend wie folgt beschreiben: Der Stuhl enthält eine Tragkonstruktion, welche einen Sitzteil, eine Rückenlehne und gegebenenfalls mindestens eine Armlehne bildet. Die Tragkonstruktion ist mit mindestens einer im Sitzbereich und/oder auf der dem Sitzbereich abgewandten Seite angeordneten Abdeckung ausgestattet, welche aus einem Luftschall absorbierenden Material besteht, und welche mit einer schalldurchlässigen Verkleidung, z.B. in Form eines Gewebes, überzogen ist. Die Tragkonstruktion enthält mindestens einen Tragteil, der im Anordnungsbereich der Abdeckung mit mehreren, für den Luftschall durchlässigen Durchtrittsöffnungen versehen ist. Dadurch kann der Luftschall beidseitig in die Abdeckung eindringen, wobei ein wesentlicher Teil des Luftschalles absorbiert wird. Entsprechend ist eine bedeutende Reduktion des Lärmpegels in einem mit derartigen Stühlen bestuhlten Raum, z.B. in einem Schienenfahrzeug, erzielbar.

## Patentansprüche

1. Stuhl mit einer einen Sitzteil (2a), eine Rückenlehne (2b) und gegebenenfalls mindestens eine Armlehne (11) bildenden Tragkonstruktion (2), **dadurch gekennzeichnet, dass** mindestens einer von den vorgenannten Teilen (2a, 2b, 11) des Stuhls mit mindestens einer dem Raum zugewandten Abdeckung (12, 13, 14) versehen ist, welche ein Luftschall absorbierendes Material enthält, und dass die Tragkonstruktion (2) mindestens einen zur Aufnahme der betreffenden Abdeckung (12, 13, 14) bestimmten Tragteil (6, 9; 20) enthält, der zumindest im Anordnungsbereich der Abdeckung (12, 13, 14) eine schalldurchlässig ausgeführte Struktur aufweist.

2. Stuhl nach Anspruch 1, bei welchem der Tragteil (6, 9; 20 mit mehreren, ihn durchsetzenden Durchtrittsöffnungen (17) versehen ist, wobei die Summe der Querschnitte der im Anordnungsbereich der Abdeckung (12, 13, 14) vorgesehenen Durchtrittsöffnungen (17) mindestens 10%, z.B. ca. 30%, der abzudeckenden Flächenpartie des Tragteils (6, 7, 9; 20) entspricht.

3. Stuhl nach Anspruch 1 oder 2, bei welchem der Tragteil (6, 9) in Form einer gelochten Wandpartie ausgeführt ist.

4. Stuhl nach Anspruch 1 oder 2, bei welchem der Tragteil (20) eine gitterartige Stützanordnung (18), z.B. in Form eines Gewebes oder eines Geflechts, enthält.

5. Stuhl nach einem der vorangehenden Ansprüche, bei welchem mindestens ein Teil der Abdeckung (12) in Form einer im Sitzbereich angeordneten Polsterung (12a, 12b) des Sitzteils (2a) und/oder der Rückenlehne (2b) ausgeführt ist.

6. Stuhl nach einem der vorangehenden Ansprüche, bei welchem mindestens ein Teil der Abdeckung (13) auf der dem Sitzbereich abgewandten Seite des Sitzteils (2a) und/oder der Rückenlehne (2b) angeordnet ist.

7. Stuhl nach einem der vorangehenden Ansprüche, bei welchem die Abdeckung (12, 13, 14) mit einer Durchtrittsöffnungen aufweisenden, schalldurchlässigen Verkleidung (15), z.B. in Form eines Gewebes, eines Geflechts oder einer perforierten Folie, versehen ist.

8. Stuhl nach einem der vorangehenden Ansprüche, bei welchem die Abdeckung (12, 13, 14) mindestens eine Matte enthält, die zumindest teilweise aus einem offenporigen Schaumstoff, z.B. Polyether, besteht.

9. Stuhl nach einem der vorangehenden Ansprüche, bei welchem die Tragkonstruktion (2) des Sitzteils (2a) und/oder der Rückenlehne (2b) zwei in den seitlichen Randbereichen des Tragteils (6) angeordnete, Durchtrittsöffnungen (17) aufweisende Seitenwandpartien (8) enthält, welche den Anordnungsbereich der Abdeckung (12) seitlich begrenzen.

10. Fahrzeug, insbesondere Schienenfahrzeug, mit einer Bestuhlung, welche mindestens einen Stuhl nach einem der Ansprüche 1 bis 9 aufweist.

## Claims

1. A seat with a support construction (2) that forms a seat part (2a), a back rest (2b) and, if applicable, at least one arm rest (11), **characterized in that** at least one of the parts (2a, 2b, 11) of the seat is provided with at least one outwardly facing cover (12, 13, 14) that contains a material which absorbs airborne sound, and that the support construction (2) contains at least one support part (6, 9, 20) for accommodating the cover (12, 13, 14) in question, with said support part containing a structure that is designed to transmit sound at least in the region in which the cover (12, 13, 14) is arranged.

2. A seat according to claim 1, wherein the support part (6, 9, 20) is provided with several through-openings (17), and wherein the sum of the cross sections of the through-openings (17) situated in the region in which the cover (12, 13, 14) is arranged corresponds to at least 10 %, e.g., approximately 30 %, of the surface section of the support part (6, 7, 9, 20) to be covered.

3. A seat according to claim 1 or 2, wherein the support part (6, 9) is realized in the form of a perforated wall section.

4. A seat according to claim 1 or 2, wherein the support part (20) contains a screen-like support arrangement (18), e.g., in the form of a woven fabric or a braiding.

5. A seat according to one of the preceding claims, wherein at least part of the cover (12) is realized in the form of a padding (12a, 12b) of the seat part (2a) and/or the back rest (2b), with said padding being arranged in the seating area.

6. A seat according to one of the preceding claims, wherein at least part of the cover (13) is arranged on the side of the seat part (2a) and/or the back rest (2b) which faces away from the seating area.

7. A seat according to one of the preceding claims, wherein the cover (12, 13, 14) is provided with a lining (15) that contains through-openings and is designed to transmit sound, with the lining being realized, e.g., in the form of a woven fabric, a braiding or a perforated foil.

8. A seat according to one of the preceding claims, wherein the cover (12, 13, 14) contains at least one mat that at least partially consists of a cellular material with open pores, e.g., polyether.

9. A seat according to one of the preceding claims, wherein the support construction (2) of the seat part (2a) and/or the back rest (2b) contains two side wall sections (8) that are arranged in the lateral edge regions of the support part (6) and provided with through-openings (17), with said side wall sections laterally limiting the region in which the cover (12) is arranged.

10. A vehicle, in particular, rail vehicle, with a seat arrangement that contains at least one seat according to one of claims 1-9.

## Revendications

1. Fauteuil avec un siège (2a), un dossier (2b) et éventuellement une construction porteuse (2) formant au moins un accoudoir (11), **caractérisé en ce qu'**au moins une des pièces (2a, 2b, 11) du fauteuil est munie d'au moins une garniture (12, 13, 14) faisant face à l'espace extérieur qui contient une matière absorbant le bruit de l'air et que la construction porteuse (2) comporte au moins une pièce porteuse (6, 9, 20) destinée à recevoir la garniture correspondante (12, 13, 14), qui présente, au moins dans le secteur de mise en place de la garniture (12, 13, 14), une structure laissant passer le son.

2. Fauteuil selon la revendication 1, sur lequel la pièce porteuse (6, 9, 20) est munie de plusieurs ouvertures de passage (17) la traversant, la somme des sections transversales des ouvertures de passage (17) prévues dans la zone de mise en place de la garniture (12, 13, 14) équivalant à au moins 10 %, par exemple environ 30 %, de la partie de la surface à garnir de la pièce porteuse (6, 7, 9, 20).

3. Fauteuil selon la revendication 1 ou 2, sur lequel la pièce porteuse (6, 9) est conçue sous forme d'une partie murale perforée.

4. Fauteuil selon la revendication 1 ou 2, sur lequel la pièce porteuse (20) inclut un système grillagé de soutien (18), se présentant par exemple sous la forme d'un tissage ou d'un treillis.

5. Fauteuil selon une des revendications précédentes, sur lequel au moins une partie de la garniture (12) est réalisée sous forme d'un capitonnage (12a, 12b) placé dans la zone d'assise du siège (2a) et/ou du dossier (2b).

6. Fauteuil selon une des revendications précédentes, sur lequel au moins une partie de la garniture (13) est placée sur la face opposée à la zone d'assise du siège (2a) et/ou du dossier (2b).

7. Fauteuil selon une des revendications précédentes, sur lequel la garniture (12, 13, 14) est munie d'un revêtement (15), se présentant par exemple sous la forme d'un tissage, d'un treillis ou d'une pellicule perforée, présentant des ouvertures de passage et laissant passer le son.

8. Fauteuil selon une des revendications précédentes, sur lequel la garniture (12, 13, 14) inclut au moins une épaisseur qui consiste au moins partiellement en une mousse à pores ouverts, par exemple du polyester.

9. Fauteuil selon une des revendications précédentes, sur lequel la construction porteuse (2) du siège (2a) et/ou du dossier (2b) comporte deux parties murales latérales (8) positionnées dans les bords latéraux de la pièce porteuse (6), comportant des ouvertures de passage (17) qui délimitent latéralement la zone de mise en place de la garniture (12).

10. Véhicule, en particulier véhicule sur rails, équipé de fauteuils, qui présente au moins un fauteuil selon une des revendications 1 à 9.
